# EUROPEAN PATENT APPLICATION

(11) **EP 4 817 398 A1**
(43) Date of publication of application: **07.10.2026**
(21) Application number: 25747718.2
(22) Date of filing: 22.01.2025
(51) Int. Cl.: A01D 75/18, A01D 75/20, A01D 34/82, A01D 34/84

(54) **ROBOT**

(30) Priority: 04.02.2024 CN 202410159229
(71) Applicant: Shenzhen Mammotion Innovation Co., Limited, Shenzhen, Guangdong 518000 (CN)
(72) Inventor: WEI, Jidong, Shenzhen, Guangdong 518000 (CN); CHEN, Shaojie, Shenzhen, Guangdong 518000 (CN); XU, Yuanjun, Shenzhen, Guangdong 518000 (CN); PEI, Lei, Shenzhen, Guangdong 518000 (CN)
(74) Representative: Huang, Liwei
(86) International application number: PCT/CN2025/074088
(87) International publication number: WO 2025/162148

(57) **Abstract**

A robot comprises a robot body and a cutting mechanism. The robot body comprises a vehicle body and a mobility assembly. The mobility assembly is disposed on the vehicle body and configured to drive the vehicle body to travel. The cutting mechanism comprises a connecting assembly and a cutting assembly. The cutting assembly is connected to the vehicle body through the connecting assembly, and the cutting assembly is disposed on a peripheral side of the vehicle body. Therein, the cutting assembly comprises a blade disc and a protective cover. A cutting blade is mounted on the blade disc, and the protective cover is disposed above the blade disc.

## Description

### TECHNICAL FIELD

This disclosure relates to the field of mowing equipment, and in particular to a robot.

### BACKGROUND TECHNOLOGY

With the continuous improvement of people's living standards, people have higher and higher requirements for leisure environments. Sites such as private gardens, parks, and playgrounds have become the best places for people's leisure and entertainment. Currently, robots are used to trim grass in private gardens, parks, playgrounds, and other sites from time to time to ensure aesthetics.

However, the robot performs cutting by using a high-speed rotating blade disc. Since sharp cutting blades are provided on the blade disc, effective protection needs to be targeting the cutting blades to protect the cutting blades and prevent the cutting blades from hurting users, so as to avoid accidents.

### SUMMARY

This disclosure provides a robot, which is capable of effectively protecting a cutting blade through a protective cover, avoiding damage to the cutting blade due to collision with an obstacle.

This disclosure provides a robot, comprising:
a robot body comprising a vehicle body and a mobility assembly, wherein the mobility assembly is disposed on the vehicle body and is configured to drive the vehicle body to travel; and
a cutting mechanism comprising a connecting assembly and a cutting assembly, wherein the cutting assembly is connected to the vehicle body through the connecting assembly, the cutting assembly is disposed on a peripheral side of the vehicle body, the cutting assembly comprises a blade disc and a protective cover, and the protective cover is rotatably mounted on a side of the blade disc.
wherein the cutting assembly comprises a blade disc and a protective cover, and the protective cover is rotatably mounted on a side of the blade disc.

In the robot according to an embodiment of the present disclosure, the protective cover is rotatably mounted on a side of the blade disc.

In the robot according to an embodiment of the present disclosure, the protective cover comprises a compressible and deformable protective edge, wherein, when the protective edge is uncompressed, a projection of at least a portion of the protective cover covers a projection of a cutting region of a cutting blade; and when the protective edge is compressed, the projection of the protective cover approaches the projection of the cutting region of the cutting blade.

In the robot according to an embodiment of the present disclosure, the protective cover further comprises a cover body, the protective edge has a connecting portion and an anti-collision portion made of a flexible material, and the anti-collision portion is disposed on an outer side of the cover body through the connecting portion.

In the robot according to an embodiment of the present disclosure, the anti-collision portion comprises a plurality of flexible units arranged at intervals, and the flexible units extend radially outward from the cover body and are configured to bend when subjected to a force.

In the robot according to an embodiment of the present disclosure, a length of each of the flexible units extending outward is greater than a spacing between adjacent two of the flexible units; and/or the flexible units extend obliquely in a same direction.

In the robot according to an embodiment of the present disclosure, the connecting portion has an edge-wrapping structure made of a flexible material, the edge-wrapping structure is disposed around an outer periphery of the cover body, and the anti-collision portion is integrally formed with the edge-wrapping structure.

In the robot according to an embodiment of the present disclosure, an annular groove is provided on the edge-wrapping structure, and the connecting portion is sleeved on the outer side of the cover body through the annular groove.

In the robot according to an embodiment of the present disclosure, the cutting assembly comprises a drive motor, the blade disc is drivingly connected to an output shaft of the drive motor, and the protective cover is rotatably connected to a drive housing of the drive motor.

In the robot according to an embodiment of the present disclosure, the cutting mechanism further comprises a bearing assembly, an mounting hole is provided on the protective cover, an outer ring of the bearing assembly is mounted in the mounting hole, and an inner ring of the bearing assembly is connected to the drive housing.

In the robot according to an embodiment of the present disclosure, the bearing assembly comprises a first rolling bearing and a second rolling bearing, a first counterbore and a second counterbore are respectively provided at two ends of the mounting hole, the first rolling bearing is mounted in the first counterbore, and the second rolling bearing is mounted in the second counterbore.

In the robot according to an embodiment of the present disclosure, the protective device further comprises a protective member disposed on an outer side of the protective cover, wherein at least a partial structure of the protective member exceeds an outer contour of the protective cover in a forward traveling direction of the robot.

In the robot according to an embodiment of the present disclosure, an avoidance opening is formed on the protective member, and the avoidance opening is provided on a side of the cutting mechanism facing away from the robot, so that the protective edge located on a side of the avoidance opening is compressed in response to abutting against an obstacle.

In the robot according to an embodiment of the present disclosure, the protective member comprises a protective strip, the protective strip surrounds to form a semi-annular structure having the avoidance opening, and the semi-annular structure is fixedly connected to the drive motor and is disposed facing the forward direction of the robot.

In the robot according to an embodiment of the present disclosure, wherein the cutting blade is provided with cutting segments and protective segments arranged at intervals , the protective segments being configured to prevent non-cutting objects from entering the cutting segments

In the robot according to an embodiment of the present disclosure, wherein each of the cutting segments has a thin sheet-like structure, and each of the protective segments has a thick blunt structure and protrudes beyond a cutting end face of the cutting segments.

In the robot according to an embodiment of the present disclosure, a fan structure is provided on a side of the blade disc facing away from a cutting blade, and the fan structure is configured to generate an airflow blowing toward the cutting blade.

In the robot according to an embodiment of the present disclosure, the cutting assembly comprises an abutment member disposed below the blade disc, and the abutment member is configured to drive a cutting blade to move upward in response to the cutting assembly contacting an obstacle.

In the robot according to an embodiment of the present disclosure, a side of the abutment member facing away from the cutting blade is a convex curved structure.

In the robot according to an embodiment of the present disclosure, the connecting assembly comprises a connecting arm and a mounting assembly connected to the vehicle body, and the cutting assembly is rotatably connected to the mounting assembly through the connecting arm.

In the robot according to an embodiment of the present disclosure, the connecting arm comprises a first link, a second link, and an adjusting member, the first link and the second link are connected between the mounting assembly and the cutting assembly, and the adjusting member is connected between the first link and the second link and configured to adjust a swing amplitude of the connecting arm.

In the robot according to an embodiment of the present disclosure, the adjusting member comprises an adjusting screw and an elastic member, a threaded hole is provided on the first link, the adjusting screw is threadedly connected in the threaded hole and extends to the second link, and the elastic member is disposed between the first link and the second link.

In the robot according to an embodiment of the present disclosure, the mounting assembly comprises a rotating portion and a mounting portion connected to the vehicle body, the connecting arm is connected to the rotating portion and is rotatable about a first axis, the rotating portion is connected to the mounting portion and is rotatable about a second axis, and the first axis is perpendicular to the second axis.

In the robot according to an embodiment of the present disclosure, the protective cover is rotatable; and an axis of rotation of the protective cover is parallel to an axis of rotation of the blade disc, or an angle between the axis of rotation of the protective cover and the axis of rotation of the blade disc is a, wherein 0 degrees < a < 45 degrees.

In the robot according to an embodiment of the present disclosure, the axis of rotation of the blade disc is parallel to a height direction of the vehicle body.

The technical solution provided by the embodiments of the present disclosure may include the following beneficial effects: this disclosure designs a robot comprising a robot body and a cutting mechanism, wherein the cutting assembly comprises a blade disc and a protective cover, a cutting blade is mounted on the blade disc, and the protective cover is disposed above the blade disc to effectively protect the cutting blade, avoiding damage to the cutting blade due to collision with an obstacle, thereby increasing the service life of the blade disc and the cutting blade.

It should be understood that the above general description and the following detailed description are only exemplary and explanatory, and are not intended to limit this disclosure.

### BRIEF DESCRIPTION OF DRAWINGS

To describe the technical solutions in the embodiments of this disclosure more clearly, the drawings required to be used in the description of the embodiments will be briefly introduced below. Apparently, the drawings described below are some embodiments of this disclosure. For those of ordinary skill in the art, other drawings can also be obtained based on these drawings without creative labor.
FIG. 1 is a schematic structural view of a cutting mechanism according to an embodiment of this disclosure;
FIG. 2 is a schematic cross-sectional view of the cutting mechanism in FIG. 1;
FIG. 3 is a schematic view of the cutting mechanism in FIG. 1 when a vehicle body is placed horizontally, and the cutting mechanism is deflected in a horizontal plane and in an extended state;
FIG. 4 is a schematic view of the cutting mechanism in FIG. 1 when contacting an obstacle;
FIG. 5 is a schematic view of the cutting mechanism in FIG. 1 in a compressed state;
FIG. 6 is a schematic partial cross-sectional view of the cutting mechanism in FIG. 1;
FIG. 7 is a schematic cross-sectional view of the cutting assembly in FIG. 1;
FIG. 8 is an exploded view of the cutting assembly in FIG. 1;
FIG. 9 is an exploded view of the protective cover in FIG. 1;
FIG. 10 is a schematic structural view of the cutting blade in FIG. 1;
FIG. 11 is an exploded view of the connecting arm in FIG. 1;
FIG. 12 is an exploded view of the mounting assembly in FIG. 1.

### DESCRIPTION OF REFERENCE SIGNS:

1000, cutting mechanism; 2000, robot body; 100, cutting assembly; 101, first region; 102, second region; 10, protective cover; 11, cover body; 111, mounting hole; 1111, counterbore structure; 12, protective edge; 121, anti-collision portion; 122, connecting portion; 123, edge-wrapping structure; 20, blade disc; 21, cutting blade; 211, cutting segment; 212, protective segment; 213, blade mounting portion; 22, rotating disc; 221, fan structure; 30, drive motor; 31, motor body; 32, drive housing; 311, output shaft; 40, bearing assembly; 50, abutment member; 60, transmission member; 200, connecting arm; 201, first link; 2011, first connecting portion; 2012, second connecting portion; 2013, threaded hole; 202, second link; 2021, first engaging portion; 2022, second engaging portion; 203, adjusting member; 2031, adjusting screw; 2032, elastic member; 300, mounting assembly; 301, mounting portion; 3011, limiting groove; 302, rotating portion; 3021, first mounting hole; 3022, second mounting hole; 3023, limiting post; 303, resetting member; 304, connecting shaft; 400, obstacle.

### DETAILED DESCRIPTION

The technical solutions in the embodiments of this disclosure will be clearly and completely described below with reference to the drawings in the embodiments of this disclosure. Apparently, the described embodiments are only a part of the embodiments of this disclosure, rather than all the embodiments. All other embodiments obtained by those of ordinary skill in the art based on the embodiments in this disclosure without creative efforts shall fall within the scope of protection of this disclosure.

It should also be understood that the terms used in the specification of this disclosure are only for describing specific embodiments. In the description of this disclosure, it should be understood that orientation or positional relationships indicated by terms such as "center", "longitudinal", "transverse", "length", "width", "thickness", "up", "down", "front", "back", "left", "right", "vertical", "horizontal", "top", "bottom", "inside", "outside", "clockwise", and "counterclockwise" are based on orientation or positional relationships shown in the drawings, which are only for convenience of describing this disclosure and simplifying description, rather than indicating or implying that the indicated device or element must have a specific orientation, be constructed and operated in a specific orientation, and therefore cannot be understood as a limitation on this disclosure. In addition, terms "first" and "second" are only used for descriptive purposes, and cannot be understood as indicating or implying relative importance or implicitly pointing out the number of indicated technical features. Thus, features defined with "first" and "second" may explicitly or implicitly include one or a plurality of the features. In the description of this disclosure, "a plurality of" means two or more, unless otherwise explicitly and specifically defined.

Some embodiments of this disclosure will be described in detail below with reference to the drawings. In case of no conflict, the following embodiments and features in the embodiments may be combined with each other.

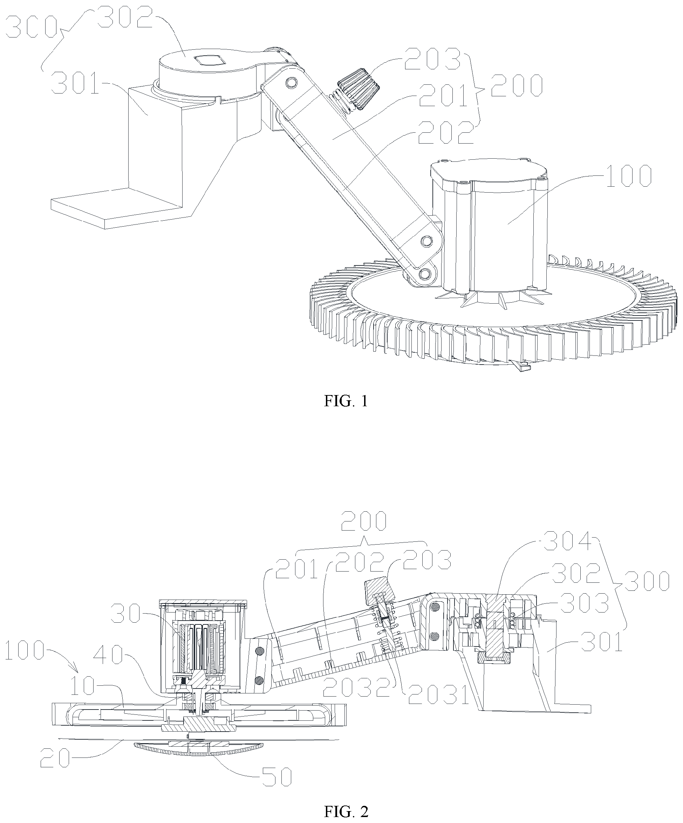

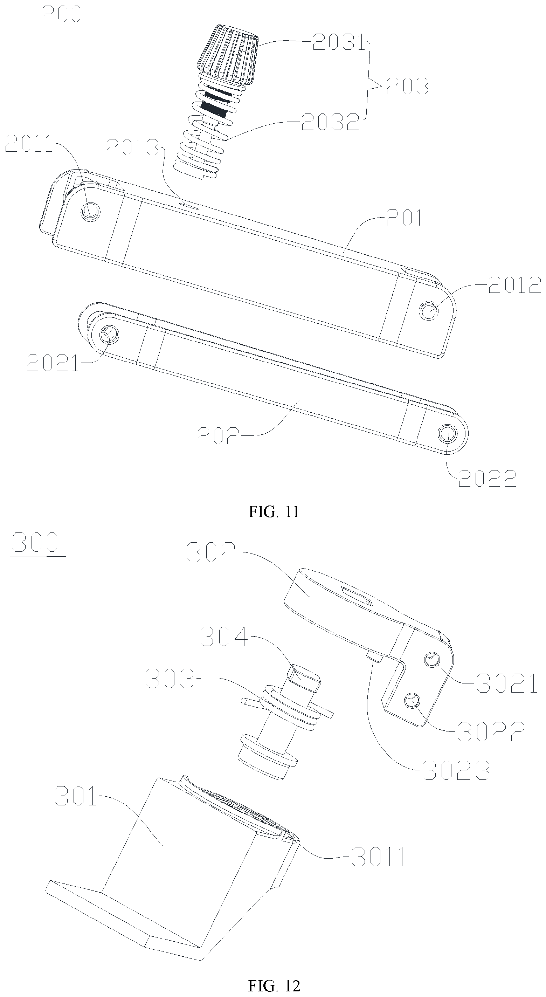

As shown in FIGS. 1 to 12, this disclosure provides a robot comprising a robot body 2000 and a cutting mechanism 1000. The robot body 2000 comprises a vehicle body and a mobility assembly. The cutting mechanism 1000 is provided on the vehicle body. The mobility assembly is provided on the vehicle body and is configured to drive the vehicle body to travel, so that the cutting mechanism 1000 is capable of performing cutting during a traveling process. Therein, the cutting mechanism 1000 comprises a connecting assembly and a cutting assembly 100. The cutting assembly 100 is connected to the vehicle body through the connecting assembly, and the cutting assembly 100 is disposed on a peripheral side of the vehicle body.

In this embodiment, the cutting assembly 100 comprises a blade disc 20 and a protective device. A cutting blade 21 is mounted on the blade disc 20, and the protective device is disposed above and covers the blade disc, so as to effectively protect the cutting blade 21, avoiding damage to the cutting blade 21 due to collision with an obstacle, thereby improving the service life of the blade disc 20 and the cutting blade 21.

In an optional embodiment, as shown in FIGS. 1 to 4, the protective device is rotatably connected. When the robot body 2000 drives the cutting assembly 100 to cut objects in scenes such as passage edges of a lawn, wall surfaces, fences, and the like, and when the protective device contacts an obstacle 400 such as a passage edge, a wall surface, or a fence, the protective device is rotatable relative to the obstacle 400 such as a passage edge, a wall surface, or a fence, reducing wear of the protective device during a cutting process of the cutting assembly 100.

In an optional embodiment, the protective device comprises a protective cover at least a portion of which is made of a flexible material. The protective cover is rotatably connected and disposed to coverone side of the cutting blade 21, so as to effectively protect the cutting blade 21, prevent the cutting blade 21 from being damaged due to collision with the obstacle 400.

In an optional embodiment, the protective cover comprises a compressible and deformable protective edge 12. When the protective edge 12 is not compressed, a projection of at least a portion of the protective cover covers a projection of a cutting region of the cutting blade 21, which is capable of effectively protecting the cutting blade 21 to avoid damage to the cutting blade 21 due to collision with the obstacle 400. When the protective edge 12 is compressed, the projection of the protective cover approaches the projection of the cutting region of the cutting blade 21, which is capable of reducing a distance from the cutting blade 21 to the edge of the protective cover, thereby effectively cutting objects at the edge of the protective cover.

Illustratively, the protective cover further comprises a cover body 11 configured to protect the cutting blade 21. The cover body 11 is provided on one side of the cutting blade 21, and the protective edge 12 is disposed on the edge of the cover body 11. Therein, the projection of the cutting region of the cutting blade 21 covers the projection of the cover body 11. When the protective edge 12 is not compressed, the projection of the protective cover covers the projection of the cutting region. so that the cutting blade 21 can be effectively protected and can be prevented from being damaged due to collision with the obstacle 400, thereby providing protection. In addition, the compressible and deformable protective edge 12 can allow the cutting blade 21 to be closer to the edge of the cover body 11, so as to cut an object to be cut at the edge of the cover body 11.

With the above technical solution, since the protective cover has the compressible and deformable protective edge 12, when the protective edge 12 is not compressed, the projection of at least a portion of the protective cover covers the projection of the cutting region of the cutting blade 21, so that the cutting blade 21 can be effectively protected, thereby preventing the cutting blade 21 from causing injury or damage to the blade itself, a human body, the obstacle 400, and the like. When the protective edge 12 is compressed, the projection of the protective cover approaches the projection of the cutting region of the cutting blade 21, which not only avoids the cutting blade 21 being exposed outside the protective edge 12, but also reduces the distance from the cutting blade 21 to the edge of the cover body 11, thereby effectively cutting objects at the edge of the cover body 11.

Illustratively, when the robot body 2000 drives the cutting assembly 100 to cut objects in scenes such as passage edges of a lawn, wall surfaces, fences, and the like, the cutting assembly 100 extends to the passage edge, the wall surface, or the fence under driving of the connecting assembly, or the cutting assembly 100 fits the passage edge, the wall surface, or the fence during a traveling process of the robot body 2000. At this time, the protective edge 12 is deformed under compression by an obstacle such as the passage edge, the wall surface, or the fence, so that the cutting blade 21 is capable of approaching the border of the obstacle such as the passage edge, the wall surface, or the fence, thereby effectively cutting objects at the border of the obstacle such as the passage edge, the wall surface, or the fence. In addition, when the cutting assembly 100 collides with the passage edge, the wall surface, or the fence, the protective edge 12 can provide a buffering function, thereby reducing an impact force applied to the cutting assembly 100 during collision with the obstacle 400. Thereafter, when the protective edge 12 is compressed and abut against the passage edge, the wall surface, or the fence as the robot body 2000 continues to travel, the distance from the cutting blade 21 to the edge of the protective cover is reduced, thereby effectively cutting objects at the edge of the protective cover. In addition, the protective cover is rotatably connected, so that when the protective cover contacts the obstacle 400 such as a passage edge, a wall surface, or a fence, the protective cover is rotatable relative to the obstacle 400 such as a passage edge, a wall surface, or a fence, reducing wear of the protective cover during a cutting process of the cutting assembly 100.
In an optional embodiment, the protective edge has a connecting portion 122 and an anti-collision portion 121 made of a flexible material. The anti-collision portion 121 is arranged on the outer side of the protective cover 10 through the connecting portion 122. A projection formed by the anti-collision portion 121 and the cover body 11 approaches the projection of the cutting region. When the anti-collision portion 121 is not compressed, the projection formed by the anti-collision portion 121 and the cover body 11 covers the projection of the cutting region. When the anti-collision portion 121 is compressed, the projection formed by the anti-collision portion 121 and the cover body 11 approaches the projection of the cutting region. Therein, the anti-collision portion 121 is integrally formed with the connecting portion 122, and the connecting portion 122 is mounted to a side or a peripheral side of the cover body 11, which has advantages of reducing a manufacturing cost of the protective edge 12, a stable structure, high strength, long service life, and the like.

In an optional embodiment, the anti-collision portion 121 comprises a plurality of flexible units arranged at intervals. The flexible units extend radially outward from the connecting portion 122 and are configured to be compressed or bent when subjected to a force, reducing occurrence of fracture of the flexible units due to friction with the obstacle 400, and at the same time making the end of the cutting blade 21 approach the edge of the protective cover 10, thereby effectively cutting objects at the edge of the protective cover.

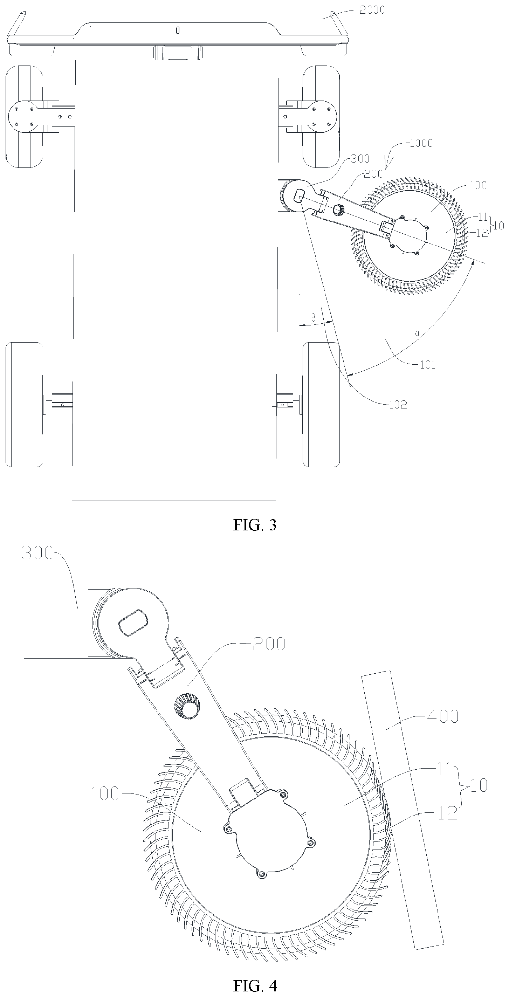

In an optional embodiment, as shown in FIGS. 4, 8, and 9, the length of each of the flexible units extending outward is greater than a spacing between adjacent two of the flexible units. When the robot body 2000 drives the cutting assembly 100 along the obstacle such as the passage edge, the wall surface, or the fence of the lawn, and when the cutting blade 21 cuts objects, the flexible units contact and are compressed by the obstacle 400 such as the passage edge, the wall surface, or the fence. Setting the length of each of the flexible units extending outward to be greater than the spacing between adjacent two of the flexible units is capable of utilizing a first compressed flexible unit to contact and compress a subsequently compressed flexible unit during a compression process. This is not only capable of buffering the first compressed flexible unit, but also is capable of avoiding direct collision of the subsequently compressed flexible unit with the obstacle 400. Noise can be reduced through layer-by-layer compression between the flexible units, and stress points of the flexible units can also be dispersed, increasing the service life of the flexible units. Among the adjacent two flexible units, when a first flexible unit is deformed under squeezing, an end of the first flexible unit away from the cover body 11 covers a root of a second flexible unit close to the cover body 11. In this way, each flexible unit contacts the obstacle through its end, which is capable of avoiding wear at roots of the flexible units that leads to fracture of the flexible units from the roots and shortens the service life of the flexible units.

In an optional embodiment, the flexible units are inclined and extend in a same direction of the connecting portion 122, so that during a traveling process of the robot body 2000 carrying the cutting assembly 100, when the cutting assembly 100 collides with the obstacle 400, the flexible units can provide a buffering function. When the robot body 2000 continues to drive the cutting assembly 100 to cut objects, the flexible units are compressed one by one along the obstacle 400.

Illustratively, the flexible units are arranged counterclockwise on an outer peripheral surface of the protective cover, so that a compression direction of the flexible units are arranged along a counterclockwise direction of the protective cover, and one flexible unit is laminated on top of another flexible unit.

In an optional embodiment, the connecting portion 122 has an edge-wrapping structure 123 made of a flexible material. The edge-wrapping structure 123 is disposed around the outer periphery of the cover body 11, and the anti-collision portion 121 is integrally formed with the edge-wrapping structure 123, so that the connecting portion 122 is capable of being firmly fixed on the outer periphery of the cover body 11, while the anti-collision portion 121 can provide a buffering function and reduce the distance between the cutting blade 21 and an edge of the protective cover, thereby effectively cutting the object to be cut at the edge of the protective cover.

In an optional embodiment, an annular groove is provided on the edge-wrapping structure 123, and the connecting portion 122 fixes the annular groove on the outer side of the cover body 11 by means of assembly; or, the edge-wrapping structure 123 is molded on the peripheral side of the cover body 11 through an injection molding process to realize a fixed connection between the protective edge 12 and the cover body 11. This is capable of reducing an assembly process between the protective edge 12 and the cover body 11. By fixing the arc-shaped annular groove to the outer side of the cover body 11 by assembly, when the protective edge 12 is damaged, only the protective edge 12 needs to be replaced, without replacing the protective cover 10 as a whole, thereby reducing use costs..

In an optional embodiment, a projection of the cover body 11 on a first plane is formed as a first circle, a projection of the cutting region of the cutting blade 21 on the first plane is formed as a second circle, and when the protective edge 12 is not compressed, a projection of an outer boundary of the protective edge 12 on the first plane is formed as a third circle. Therein, the first circle, the second circle, and the third circle are concentric circles, and a diameter of the first circle is smaller than a diameter of the second circle, and the diameter of the second circle is smaller than a diameter of the third circle, so that the protective edge 12 is capable of protecting the cutting blade 21 when uncompressed, and is deformed when being compressed under force to make the cutting blade 21 closer to the border of the obstacle, thereby cutting grass at the edge.

It should be explained that when the protective edge 12 is deformed under compress of the obstacle, the diameter of the third circle approaches the diameter of the first circle. At this time, the edge of the protective cover contacts the border of the obstacle, so that the cutting blade 21 is capable of cutting grass at the edge.

In an optional embodiment, when at least a part of the protective edge 12 is compressed to a preset shape, the projection of the protective cover overlaps with a part of the projection of the cutting region to protect the cutting blade 21, prevent the cutting blade 21 from colliding with the obstacle.

In an optional embodiment, the cutting mechanism further comprises a drive assembly configured to drive the blade disc 20 to rotate. The cover body 11 is rotatably connected to the drive assembly, so that when cutting passage edges of a lawn, wall surfaces, fences, and the like, the cover body 11 is capable of contacting the obstacle 400 such as a passage edge, a wall surface, or a fence and rotating relative to the obstacle 400 such as a passage edge, a wall surface, or a fence, so as to reduce wear of the protective device during a cutting process of the cutting assembly 100.

In an optional embodiment, the drive assembly comprises a drive motor 30. The drive motor 30 is connected to the vehicle body through the connecting assembly, and the drive motor 30 is drivingly connected to the cutting blade 21 to drive the cutting blade 21 to rotate so as to perform a cutting operation. The protective cover is rotatably connected to the drive motor 30 and is provided on the outer side of the cutting blade 21 to effectively protect the cutting blade 21, avoiding damage to the cutting blade 21 due to collision with the obstacle 400.

In an optional embodiment, as shown in FIG. 2, FIG. 11, and FIG. 12, the drive motor 30 comprises a drive housing 32 and a motor body 31 having an output shaft 311. The motor body 31 is mounted inside the drive housing 32, and the output shaft 311 is drivingly connected to the blade disc 20. The cover body 11 is rotatably connected to the drive housing 32, so that the protective cover can protecting the blade disc 20, and at the same time is capable of independently following relative to the output shaft 311. When the protective cover is close to a passage edge of a lawn, a wall surface, a fence, or the like, contact friction with the passage edge, the wall surface, and the fence can be converted into rolling friction, reducing damage caused by friction to the protective edge 12.

In an optional embodiment, the cutting mechanism comprises a bearing assembly 40. An mounting hole 111 is provided on the protective cover. An outer ring of the bearing assembly 40 is mounted in the mounting hole 111, and an inner ring of the bearing assembly 40 is connected to the drive housing 32, that is, the protective cover does not rely on the drive motor 30 and can rotate independently. When the cutting assembly 100 is close to a passage edge of a lawn, a wall surface, a fence, or the like, since the protective cover is capable of rotating independently, contact friction between the protective cover and the edge can be converted into rolling friction, so as to reduce damage caused by friction to the protective edge 12.

In an optional embodiment, the bearing assembly 40 comprises a first rolling bearing 41 and a second rolling bearing 42. A first counterbore 1111 and a second counterbore 1112 are respectively provided at two ends of the mounting hole 111. The first rolling bearing 41 is mounted in the first counterbore 1111, and the second rolling bearing 42 is mounted in the second counterbore 1112, to ensure stability of the protective cover after being connected to the drive housing 32.

In an optional embodiment, the cutting mechanism further comprises a protective member. The protective member is provided on the outer side of the protective cover, and a portion of the protective member extends beyond an outer contour of the protective cover in a forward traveling direction of the robot, which is capable of effectively preventing an accident of injuring a person on the front side at a front position of the cutting assembly 100, thereby improving safety of the protective cover.

In an optional embodiment, a protective portion is formed on the protective member. The protective portion extends in the forward traveling direction of the robot and exceeds the outer contour of the protective cover, preventing an accident of injuring a person on the front side at a front position of the cutting assembly 100, thereby improving safety of the protective cover 10.

In an optional embodiment, an avoidance opening is formed on the protective member. The avoidance opening is provided on a side of the cutting mechanism 1000 facing away from the robot, so that the protective edge 12 located on a side of the avoidance opening is capable of contacting the obstacle 400 and being compressed or bent, thereby reducing the distance from the cutting blade 21 to the edge of the protective cover, and further effectively cutting objects at the edge of the protective cover.

In an optional embodiment, the protective member comprises a protective strip. The protective strip surrounds to form a semi-annular structure having the avoidance opening. The semi-annular structure is fixedly connected to the drive motor 30 and is disposed facing the forward direction of the robot, which is configured to prevent an accident of injuring a person on the front side at a front position of the cutting assembly 100, thereby improving safety of the protective cover 10, while the avoidance opening is configured to compress the protective edge 12 when contacting the obstacle 400, reducing the distance from the cutting blade 21 to the edge of the protective cover, so as to effectively cut objects at the edge of the protective cover.

In an optional embodiment, the protective member may also comprise other shapes of profiled baffles. At least a portion of the profiled baffle extends in the forward traveling direction of the robot and exceeds the outer contour of the protective cover to form a protective portion, and at least a portion of the profiled baffle is recessed toward the inner side to form an avoidance opening, so that the protective edge 12 located on a side of the avoidance opening is capable of contacting the obstacle 400 and being compressed, thereby reducing the distance from the cutting blade 21 to the edge of the protective cover, and further effectively cutting objects at the edge of the protective cover.

In an optional embodiment, the protective cover is disposed between the drive motor 30 and the blade disc 20 and is rotatably connected to the drive housing 32 of the drive assembly, independent of the output shaft 311, which not only is capable of protecting the blade disc 20, but also is capable of independently following relative to the output shaft 311. When the protective cover is close to a passage edge of a lawn, a wall surface, a fence, or the like, contact friction with the passage edge, the wall surface, and the fence can be converted into rolling friction, reducing damage caused by friction to the protective edge 12.

In an optional embodiment, the protective cover is rotatable, and the axis of rotation of the protective cover is parallel to the axis of rotation of the blade disc 20, to facilitate rotation of the protective cover relative to the obstacle 400 when contacting or being squeezed by the obstacle 400.

In an optional embodiment, an included angle between the axis of rotation of the protective cover and the axis of rotation of the blade disc 20 is α, wherein 0 degrees < α < 45 degrees.

In an optional embodiment, the axis of rotation of the blade disc 20 is parallel to a height direction of the vehicle body.

In an optional embodiment, a cutting blade 21 is provided with cutting segments and protective segments arranged at intervals. The protective segments 212 is configured to protect a non-cutting object from entering the cutting segments 211.

In an optional embodiment, each of the cutting segments 211 is in a thin sheet structure to form a cutting edge, and each of the protective segments 212 is in a thick blunt structure and protrudes from a cutting end face of the cutting segments 211, which not only is capable of protecting the cutting edge, but also is capable of tearing a cutting object during cutting.

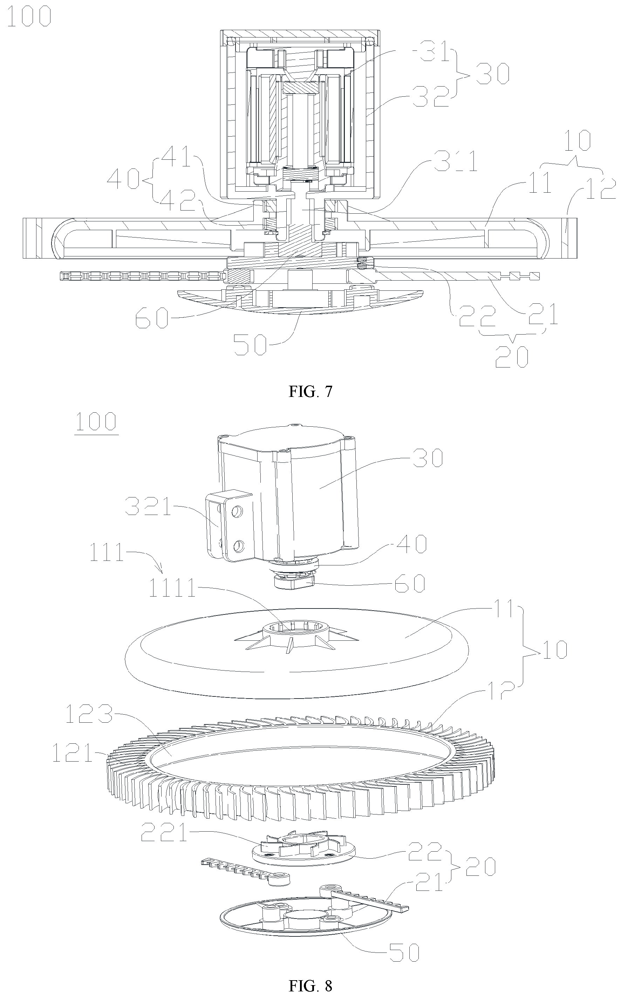

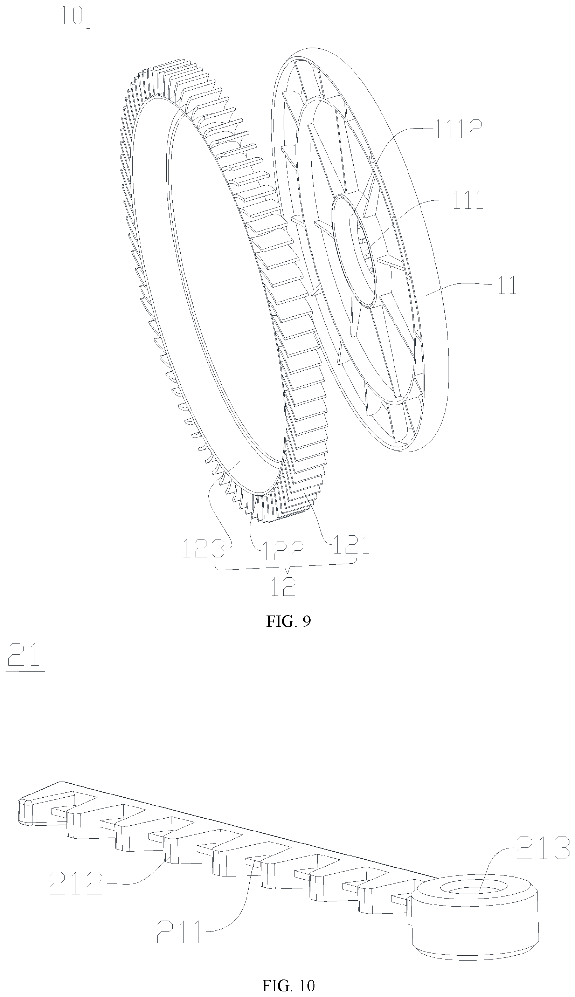

In an optional embodiment, as shown in FIG. 8 and FIG. 10, the cutting blade 21 comprises a blade body. The cutting segments 211 and the protective segments 212 are provided on a fixed edge of the blade body and extend from the fixed edge toward a cutting edge on the other side. The cutting segments 211 are mainly configured to cut objects, while the protective segments 212 are configured to protect the cutting segments 211, and the protective segments 212 are also capable of tearing a cutting object when the cutting segments 211 cut the cutting object. Therein, a cross-sectional area of the protective segments 212 gradually decreases in an extending direction from the fixed edge to the cutting edge, so that a spacing between adjacent two of the protective segments 212 increases along the extending direction of the protective segments 212, which are beneficial to increasing the cutting region of the cutting segments 211 and improving a cutting effect of the cutting segments 211. In addition, when the cutting segments 211 cut a cutting object and fails to completely cut the cutting objects at one time, a portion of the protective segments 212 located on a side of the cutting segments 211 can be used for secondary tearing of the cutting object, so as to guarantee a cutting effect of the robot.

In an optional embodiment, a fan structure is provided on a side of the blade disc 20 facing away from the cutting blade 21, and the fan structure is configured to generate an airflow blowing toward the cutting blade 21.

Illustratively, the blade disc 20 comprises a rotating disc 22. The cutting blade 21 is mounted on the rotating disc 22, and the rotating disc 22 is drivingly connected to the output shaft 311 of the drive motor 30 to receive mechanical energy from the drive motor 30, so that the cutting blade 21 as a whole is capable of performing a circular motion, thereby realizing a cutting operation. Therein, the fan structure 221 is provided on the side of the rotating disc 22 facing away from the cutting blade 21, and is configured to generate an airflow blowing toward the cutting blade 21. Debris after cutting objects are broken can be blown out of the rotating disc 22, so as to prevent the debris from entering a gap between the protective cover and the rotating disc 22, affecting running of the drive motor 30, or even causing the drive motor 30 to get stuck. In addition, the airflow is also capable of dissipating heat for the drive motor 30, effectively avoiding a situation where a temperature of the drive motor 30 is excessively high.

In an optional embodiment, the number of the cutting blades 21 may be two or more than two. When the number of the cutting blades 21 is two, the two cutting blades 21 are symmetrically provided on two sides of the rotating disc 22. When the number of the cutting blades 21 is three or more, the three or more cutting blades 21 may be provided on the periphery of the rotating disc 22 in a ring array around the center of the rotating disc 22.
It should be noted that an excessive number of cutting blades 21 may cause interference among the cutting blades 21, whereas an insufficient number of cutting blades 21 may reduce cutting efficiency. Therefore, two to three cutting blades 21 are preferred..

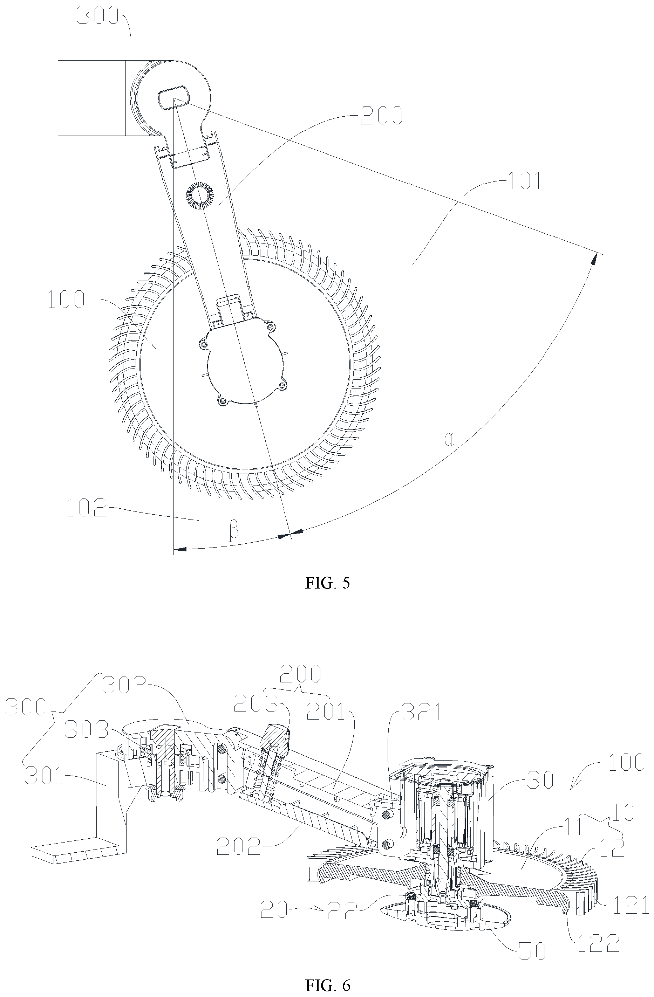

In an optional embodiment, as shown in FIGS. 6 to 8, the cutting assembly 100 comprises an abutment member 50. The abutment member 50 is provided below the cutting blade 21, and is configured to drive the cutting blade 21 to move upward when the cutting assembly 100 contacting the obstacle 400, so that the cutting assembly 100 as a whole floats upward, thereby avoiding collision between the cutting blade 21 and the obstacle 400 and effectively prolonging the service life of the cutting blade 21. Alternatively, when the obstacle 400 enters a bottom of the abutment member 50, the obstacle 400 lifts the cutting assembly 100 as a whole and can also reduce a cutting speed of the cutting blade 21, thereby preventing the cutting blade 21 from suffering secondary damage.

In an optional embodiment, a side of the abutment member 50 facing away from the cutting blade 21 is a convex curved structure, which is capable of reducing a contact area between the obstacle 400 and the abutment member 50, thereby ensuring that the cutting blade 21 is capable of slowly cutting when contacting the obstacle 400, avoiding secondary injury to the cutting blade 21. It is also capable of protecting the abutment member 50 and the drive motor 30, reducing a friction force between the abutment member 50 and the obstacle 400 and a risk of damage to the drive motor 30 due to rotor locking, thereby increasing the service life of the drive motor 30.

In an optional embodiment, the cutting assembly 100 comprises a transmission member 60. One end of the transmission member 60 is connected to the output shaft 311 of the drive motor 30, and another end of the transmission member 60 is connected to the rotating disc 22.

In an optional embodiment, as shown in FIG. 1, FIG. 2, and FIG. 11, the connecting assembly comprises a connecting arm 200 and a mounting assembly 300 connected to the vehicle body. The cutting assembly 100 is rotatably connected to the mounting assembly 300 through the connecting arm 200, so that the cutting assembly 100 is rotatable relative to the vehicle body in a horizontal direction and/or a height direction, thereby adjusting a height and an extension length of the cutting assembly 100.

Illustratively, as shown in FIGS. 3 to 5, the cutting assembly 100 rotates in the horizontal direction relative to the vehicle body to form a first region 101 and a second region 102. An area of the first region 101 is larger than an area of the second region 102. When the cutting assembly 100 contacts the obstacle 400, the obstacle 400 applies a reverse force to the cutting assembly 100, and the reverse force is capable of forcing the cutting assembly 100 to deflect toward a side of the vehicle body, that is, the cutting assembly 100 moves from the first region 101 to the second region 102, and at the same time, the cutting assembly 100 can also move from the second region 102 to the first region 101. When the cutting assembly 100 is in the first region 101, the cutting assembly 100 performs a cutting operation, and a speed of the rotating disc 22 carrying the blade 21 driven by the drive motor 30 gradually decreases as the cutting assembly 100 moves from the first region 101 to the second region 102. When the cutting assembly 100 is in the second region 102, the drive motor 30 stops driving the rotating disc 22 to carry the blade 21.

In an optional embodiment, the connecting assembly comprises a detection assembly. The detection assembly is provided on at least one of the vehicle body, the connecting arm 200, and the mounting assembly 300, and is configured to detect a moving position of the cutting assembly 100. When the detection assembly detects that the cutting assembly 100 is in the first region 101, the cutting assembly 100 performs a cutting operation; and when the detection assembly detects that the cutting assembly 100 is in the second region 102, the cutting assembly 100 stops working.

In an optional embodiment, as shown in FIG. 1, FIG. 3, and FIG. 12, the mounting assembly 300 comprises a rotating portion 302 and a mounting portion 301 connected to the vehicle body. Therein, the connecting arm 200 is rotatably connected to the rotating portion 302, and the rotating portion 302 is connected to the mounting portion 301, so that the cutting assembly 100 is rotatable in the height direction and the horizontal direction of the vehicle body. Therein, when the obstacle 400 enters the bottom of the abutment member 50, the obstacle 400 is capable of lifting the height of the cutting assembly 100 through the abutment member 50, thereby effectively avoiding damage to the cutting assembly 100 due to terrain height differences or obstructions such as stones. When the obstacle 400 contacts or collides with the protective cover 10, the obstacle 400 is capable of forcing the cutting assembly 100 to deflect toward a side of the vehicle body, so as to cut objects at a passage edge.

It should be explained that the obstacle 400 may be a passage edge, a wall surface, a fence, or the like, and the obstacle 400 may also be gravel, branches, uneven ground, or the like, which is not limited in this disclosure.

In an optional embodiment, the connecting arm 200 is rotatable about a first axis relative to the rotating portion 302, the rotating portion 302 is rotatable about a second axis relative to the mounting portion 301, and the first axis is perpendicular to the second axis.

In an optional embodiment, the mounting assembly 300 further comprises a connecting shaft 304. The rotating portion 302 is rotatably connected to the mounting portion 301 through the connecting shaft 304. The mounting portion 301 is provided with a first connecting end surface, and the rotating portion 302 is provided with a second connecting end surface. The first connecting end surface and the second connecting end surface are cooperatively connected, and the connecting shaft 304 is inserted between the first connecting end surface and the second connecting end surface, so as to rotatably mount the rotating portion 302 on the mounting portion 301.

In an optional embodiment, a limiting groove 3011 is provided on the first connecting end face, and a limiting post 3023 is provided on the second connecting end face. After the rotating portion 302 is mounted on the mounting portion 301 through cooperation of the first connecting end face and the second connecting end face, the limiting post 3023 extends into the limiting groove 3011, which is configured to limit a rotation position of the rotating portion 302 when the rotating portion 302 rotates relative to the mounting portion 301, so that the connecting arm 200 is capable of switching between the first region 101 and the second region 102.

In an optional embodiment, the mounting assembly 300 further comprises a resetting member 303. The resetting member 303 is configured to drive the connecting arm 200 to switch toward the direction of the first region 101, and is also capable of providing a buffering force when the cutting assembly 100 collides with the obstacle 400, reducing an impact force applied to the cutting assembly 100 during collision with the obstacle 400, avoiding damage to the cutting assembly 100, and extending the service life of the cutting assembly 100.

Illustratively, the resetting member 303 comprises but is not limited to a torsion spring. The torsion spring is sleeved outside the connecting shaft 304, and two ends of the torsion spring are respectively connected to the rotating portion 302 and the mounting portion 301, so that the rotating portion 302 is capable of always maintaining an elastic force toward the direction of the first region 101. When the cutting assembly 100 is in the first region 101 and contacts the obstacle 400, the impact force of the obstacle 400 on the cutting assembly 100 is greater than the elastic force of the resetting member 303, the limiting post 3023 slides from one end of the limiting groove 3011 toward another end of the limiting groove 3011, and the resetting member 303 is deformed to buffer the impact force generated when the cutting assembly 100 collides with the obstacle 400. At the same time, the cutting assembly 100 is rotatable toward the second region 102 relative to the mounting portion 301 to form an avoidance position for avoiding the obstacle 400. At this time, a rotation speed of the blade 21 driven by the drive motor 30 gradually decreases. When the cutting assembly 100 completely enters the second region 102, the drive motor 30 stops driving the blade 21 to rotate.

In an optional embodiment, the detection assembly comprises a mechanical sensor electrically connected to the drive motor 30. The mechanical sensor is provided between the mounting portion 301 and the rotating portion 302, and is configured to detect a force condition of the torsion spring, so that the drive motor 30 is capable of controlling its output rotational speed or stopping working according to mechanical data detected by the mechanical sensor.

Illustratively, when the mechanical data received by the drive motor 30 is greater than a predetermined value, the drive motor 30 stops working, and at this time the cutting assembly 100 completely enters the second region 102. When the mechanical data received by the drive motor 30 is smaller than the predetermined value, the drive motor 30 controls its output speed through a magnitude of the mechanical data, so that the cutting assembly 100 is capable of cutting at different speeds in the first region 101. When the mechanical data is minimum, the output rotational speed of the drive motor 30 is maximum, and the cutting assembly 100 is located on a side of the first region 101 away from the second region 102. When the mechanical data approaches the predetermined value, the output rotational speed of the drive motor 30 gradually decreases until the mechanical data equals the predetermined value, at which point the drive motor 30 stops working.

It should be explained that the detection assembly may also be other sensors, such as travel switches, which is not limited in this disclosure.

In an optional embodiment, as shown in FIG. 1, FIG. 2, and FIG. 11, the connecting arm 200 comprises a first link 201, a second link 202, and an adjusting member 203. The first link 201 and the second link 202 are connected between the mounting assembly 300 and the cutting assembly 100, and the adjusting member 203 is connected between the first link 201 and the second link 202 and configured to adjust a swing amplitude of the connecting arm, so as to adjust a height of the cutting assembly 100 relative to the ground, thereby adjusting a cutting height of cutting objects.

Illustratively, as shown in FIG. 2, FIG. 11, and FIG. 12, the motor body 31 is mounted inside the drive housing 32. Two first connecting holes are provided on the drive housing 32 spaced along the height direction. A first mounting hole 3021 and a second mounting hole 3022 are provided on the rotating portion 302 spaced from each other. Two ends of the first link 201 are respectively rotatably connected to the first mounting hole 3021 and one of the first connecting holes, and two ends of the second link 202 are respectively rotatably connected to the second mounting hole 3022 and another of the first connecting holes, so that the motor body 31 is floatingly connected to the rotating portion 302 through the first link 201 and the second link 202.

Illustratively, a first connecting portion 2011 and a second connecting portion 2012 are respectively provided at two ends of the first link 201. A first engaging portion 2021 and a second engaging portion 2022 are respectively provided at two ends of the second link 202. The first connecting portion 2011 and the first engaging portion 2021 are rotatably connected to the two first connecting holes. The second connecting portion 2012 and the second engaging portion 2022 are connected to the first mounting hole 3021 and the second mounting hole 3022 correspondingly. The adjusting member 203 is threadedly connected to the first link 201 and is capable of extending or retracting toward a side of the second link 202, so that by adjusting a spacing between the first link 201 and the second link 202, a floating angle of the motor body 31 can be changed, thereby adjusting the cutting height.

In an optional embodiment, the adjusting member 203 comprises an adjusting screw 2031 and an elastic member 2032. A threaded hole 2013 is provided on the first link 201. The adjusting screw 2031 is threadedly connected in the threaded hole 2013 and extends to the second link 202, and the elastic member 2032 is provided between the first link 201 and the second link 202.

In the description of this disclosure, it should be noted that, unless otherwise explicitly specified and defined, terms "mount", "engage", and "connect" should be understood in a broad sense, for example, it can be a fixed connection, a detachable connection, or an integral connection. It can be a mechanical connection or an electrical connection. It can be directly connected, or indirectly connected through an intermediate medium, or it can be internal communication between two elements or interaction relationship between two elements. For those of ordinary skill in the art, specific meanings of the above terms in this disclosure can be understood according to specific circumstances.

In this disclosure, unless otherwise explicitly specified and defined, a first feature being "on" or "under" a second feature may include direct contact between the first and second features, and may also include contact between the first and second features not directly but through another feature between them. Moreover, the first feature being "above", "over", and "on top of" the second feature includes the first feature being directly above and obliquely above the second feature, or simply indicates that a horizontal height of the first feature is higher than that of the second feature. The first feature being "below", "under", and "beneath" the second feature includes the first feature being directly below and obliquely below the second feature, or simply indicates that the horizontal height of the first feature is lower than that of the second feature.

In the description of this specification, reference to descriptions of terms such as "an embodiment", "some embodiments", "an illustrative embodiment", "an example", "a specific example", or "some examples" means that a specific feature, structure, material, or characteristic described in combination with the embodiment or example is included in at least one embodiment or example of this disclosure. In this specification, schematic expressions of the above terms do not necessarily refer to the same embodiment or example. Moreover, the specific features, structures, materials, or characteristics described may be combined in any one or a plurality of embodiments or examples in a suitable manner.

## Claims

1. A robot, comprising:
a robot body comprising a vehicle body and a mobility assembly, wherein the mobility assembly is disposed on the vehicle body and is configured to drive the vehicle body to travel; and
a cutting mechanism comprising a connecting assembly and a cutting assembly, wherein the cutting assembly is connected to the vehicle body through the connecting assembly, the cutting assembly is disposed on a peripheral side of the vehicle body,
wherein the cutting assembly comprises a blade disc, a protective cover is rotatably mounted on a side of the blade disc.

2. The robot according to claim 1, wherein a cutting blade mounted on the blade disc, the protective cover is disposed above the blade disc.

3. The robot according to claim 1, wherein the protective cover comprises a compressible and deformable protective edge, when the protective edge is uncompressed, a projection of at least a portion of the protective cover covers a projection of a cutting region of a cutting blade; and when the protective edge is compressed, the projection of the protective cover approaches the projection of the cutting region of the cutting blade.

4. The robot according to claim 2, wherein the protective cover further comprises a cover body, the protective edge has a connecting portion and an anti-collision portion made of a flexible material, and the anti-collision portion is disposed on an outer side of the cover body by the connecting portion.

5. The robot according to claim 4, wherein the anti-collision portion comprises a plurality of flexible units arranged at intervals, and the flexible units extend radially outward from the cover body and are configured to bend when subjected to a force.

6. The robot according to claim 5, wherein an outward extension length of each flexible unit is greater than a spacing between two adjacent flexible units; and/or the flexible units extend obliquely in a same direction.

7. The robot according to claim 4, wherein the connecting portion has an edge-wrapping structure made of a flexible material, the edge-wrapping structure is disposed around an outer periphery of the cover body, and the anti-collision portion is integrally formed with the edge-wrapping structure.

8. The robot according to claim 7, wherein an annular groove is formed in the edge-wrapping structure, and the connecting portion is mounted to the outer side of the cover body through the annular groove.

9. The robot according to claim 1, wherein the cutting assembly comprises a drive motor, the blade disc is drivingly connected to an output shaft of the drive motor, and the protective cover is rotatably connected to a drive housing of the drive motor.

10. The robot according to claim 9, wherein the cutting mechanism further comprises a bearing assembly, the protective cover is provided with a mounting hole, an outer ring of the bearing assembly is mounted in the mounting hole, and an inner ring of the bearing assembly is connected to the drive housing.

11. The robot according to claim 10, wherein the bearing assembly comprises a first rolling bearing and a second rolling bearing, two sides of the mounting hole are provided with a first counterbore and a second counterbore respectively, so that the first rolling bearing is mounted in the first counterbore, and the second rolling bearing is mounted in the second counterbore.

12. The robot according to claim 1, further comprising a protective member disposed on an outer side of the protective cover, wherein at least a portion of the protective member extends beyond an outer contour of the protective cover in a forward traveling direction of the robot.

13. The robot according to claim 12, wherein an avoidance opening is formed on the protective member, and the avoidance opening is provided on a side of the cutting mechanism facing away from the robot, so that the protective edge located on a side of the avoidance opening is compressed in response to abutting against an obstacle.

14. The robot according to claim 13, wherein the protective member comprises a protective strip, the protective strip surrounds to form a semi-annular structure having the avoidance opening, and the semi-annular structure is fixedly connected to the drive motor and is disposed facing the forward direction of the robot.

15. The robot according to claim 1, wherein the cutting blade is provided with cutting segments and protective segments arranged at intervals , the protective segments being configured to prevent non-cutting objects from entering the cutting segments.

16. The robot according to claim 15, wherein the cutting segments has a thin sheet-like structure, and the protective segments has a thick blunt structure and protrudes beyond a cutting end face of the cutting segment.

17. The robot according to claim 1, wherein a fan structure is provided on a side of the blade disc facing away from a cutting blade, and the fan structure is configured to generate an airflow blowing toward the cutting blade.

18. The robot according to claim 1, wherein the cutting assembly comprises an abutment member disposed below the blade disc, and the abutment member is configured to drive a cutting blade to move upward in response to the cutting assembly contacting an obstacle.

19. The robot according to claim 18, wherein a side of the abutment member facing away from the cutting blade is a convex curved structure.

20. The robot according to claim 1, wherein the connecting assembly comprises a connecting arm and a mounting assembly connected to the vehicle body, and the cutting assembly is rotatably connected to the mounting assembly through the connecting arm.

21. The robot according to claim 20, wherein the connecting arm comprises a first link, a second link, and an adjusting member, the first link and the second link are connected between the mounting assembly and the cutting assembly, and the adjusting member is connected between the first link and the second link and configured to adjust a swing amplitude of the connecting arm.

22. The robot according to claim 21, wherein the adjusting member comprises an adjusting screw and an elastic member, a threaded hole is provided on the first link, the adjusting screw is threadedly connected in the threaded hole and extends to the second link, and the elastic member is disposed between the first link and the second link.

23. The robot according to claim 20, wherein the mounting assembly comprises a rotating portion and a mounting portion connected to the vehicle body, the connecting arm is connected to the rotating portion and is rotatable about a first axis, the rotating portion is connected to the mounting portion and is rotatable about a second axis, and the first axis is perpendicular to the second axis.

24. The robot according to any one of claims 1 to 23, wherein:
the protective cover is rotatable;
an axis of rotation of the protective cover is parallel to an axis of rotation of the blade disc, or an angle between the axis of rotation of the protective cover and the axis of rotation of the blade disc is α, wherein 0° < α < 45°.

25. The robot according to claim 24, wherein the axis of rotation of the blade disc is parallel to a height direction of the vehicle body.
